(19) Europäisches Patentamt
European Patent Office
Office européen des brevets

(11) **EP 4 160 333 A1**

(12) **EUROPEAN PATENT APPLICATION**
published in accordance with Art. 153(4) EPC

(43) Date of publication:
**05.04.2023 Bulletin 2023/14**

(21) Application number: **21814627.2**

(22) Date of filing: **26.05.2021**

(51) International Patent Classification (IPC):
**G05B 19/418** (2006.01)   **G06Q 50/04** (2012.01)

(52) Cooperative Patent Classification (CPC):
**G05B 19/418; G06Q 50/04;** Y02P 90/02;
Y02P 90/30; Y02P 90/84

(86) International application number:
**PCT/JP2021/020049**

(87) International publication number:
**WO 2021/241649 (02.12.2021 Gazette 2021/48)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **26.05.2020 JP 2020091781**

(71) Applicant: **NTT Communications Corporation
Tokyo 100-8019 (JP)**

(72) Inventors:
• **SAKAINO, Akira**
  **Tokyo 100-8019 (JP)**
• **NIITSUMA, Hideaki**
  **Tokyo 100-8019 (JP)**
• **SUZUKI, Yoichi**
  **Tokyo 100-8019 (JP)**
• **ITO, Masataka**
  **Tokyo 100-8019 (JP)**

(74) Representative: **Nederlandsch Octrooibureau
P.O. Box 29720
2502 LS The Hague (NL)**

(54) **INFORMATION PROCESSING DEVICE, INFORMATION PROCESSING METHOD, AND PROGRAM THEREFOR**

(57)    An aspect of an information processing apparatus according to this invention includes an acquisition unit that acquires management information including power information related to one or more types of electric power used in a manufacturing process of a product or component among a plurality of types of electric power of different power generating systems, a calculation unit that calculates a first carbon dioxide emission amount emitted through manufacturing of the product or component based on the power information included in the management information, and an output unit that outputs information related to the first carbon dioxide emission amount.

F I G. 3

**Description**

FIELD

The present invention relates generally to an information processing apparatus, an information processing method, and a program thereof for outputting information related to an emission amount of carbon dioxide ($CO_2$) emitted in a manufacturing process of a product or component.

BACKGROUND

Solution businesses that support the circular economy are emerging, mainly in Europe. It is said that in Japan, since 2020, there are some manufacturing companies that have taken steps in large-scale investment for the circular economy, and there is a demand for technology that contributes to the circular economy through technology services based on the telecommunications business.

CITATION LIST

PATENT LITERATURE

Patent Literature 1: Japanese Patent Application KOKAI Publication No. 2004-310440

SUMMARY

TECHNICAL PROBLEM

If electric power is consumed in a manufacturing process of a product or component, $CO_2$ is emitted to obtain the electric power. Various power generating systems such as thermal power generation, hydraulic power generation, wind power generation, and solar power generation are known. The $CO_2$ emission amount varies depending on the power generating system. For example, power generation relying on fossil fuels increases $CO_2$ emissions, but power generation using renewable energies can reduce the $CO_2$ emission amount to nearly 0. If the source of the electric power is not taken into account, the $CO_2$ emission amount can be calculated or predicted based on an actual or predicted power consumption amount. However, since such calculation or prediction is different from reality, there is a demand to know the $CO_2$ emission amount in consideration of the source of the electric power. In solution businesses that support the circular economy, more detailed information related to the $CO_2$ emission amount is required.

This invention is made in response to the above circumstances and attempts to provide a technology for outputting information related to a substantive emission amount of $CO_2$ emitted in a manufacturing process of a product or component.

SOLUTION TO PROBLEM

To solve the above-described problem, one aspect of an information processing apparatus according to the present invention includes an acquisition unit that acquires management information including power information related to one or more types of electric power used in a manufacturing process of a product or component among a plurality of types of electric power of different power generating systems, a calculation unit that calculates a first carbon dioxide emission amount emitted through manufacturing of the product or component based on the power information included in the management information, and an output unit that outputs information related to the first carbon dioxide emission amount.

ADVANTAGEOUS EFFECTS OF INVENTION

According to an aspect of the present invention, a technology for outputting information related to a substantive emission amount of $CO_2$ emitted in a manufacturing process of a product or component can be provided.

BRIEF DESCRIPTION OF THE DRAWINGS

FIG. 1 is a block diagram showing an example of an information processing system according to an embodiment.

FIG. 2 is a block diagram showing an example of a schematic configuration of an information processing apparatus according to the embodiment.

FIG. 3 is a functional block diagram showing an example of a processor of the information processing apparatus according to the embodiment.

FIG. 4 is a diagram showing an example of a data platform, etc. stored in an auxiliary storage unit of the information processing apparatus according to the embodiment.

FIG. 5 is a block diagram showing an example of a schematic configuration of an information output system of a plant according to the embodiment.

FIG. 6 is a flowchart showing an example of information processing including $CO_2$ emission amount calculation performed by the information processing apparatus according to the embodiment.

DETAILED DESCRIPTION

An embodiment according to the present invention will be described below with reference to the drawings.

(Summary)

An information processing system according to the embodiment creates and stores usage history information by power type for machine tools, conveying machines, transport vehicles, etc. actually used in each process from manufacturing to reuse in a manufacturing process of a product or component that can selectively use a plurality of types of electric power of different power generating systems (including a manufacturing process using a reused product), and calculates a $CO_2$ emission amount directly or indirectly emitted through manufacturing of each and every product or component based on the stored usage history information.

Furthermore, if the power type can be selected for each manufacturing sub-process included in the manufacturing process, the information processing system creates and stores usage history information indicating which power type is selected and used in which time zone by manufacturing sub-process, and calculates a $CO_2$ emission amount for all processes, manufacturing processes, or manufacturing sub-processes based on this usage history information.

This makes it possible to calculate, record, trace, and verify an accurate $CO_2$ emission amount for each product or component no matter what type of electric power is selected for use in the manufacturing process. In addition, even if the manufacturing process is composed of a plurality of sub-processes and each sub-process selects and uses any power type, the $CO_2$ emission amount can be accurately calculated, recorded, traced, and verified.

Further, a price of the product or component may be calculated based on the $CO_2$ emission amount according to the power type used in the manufacturing process, and information of the price of the product or component may be output together with the $CO_2$ emission amount. If the power type used in the manufacturing process is different, the price of the same product or component will be different due to an influence of an environmental impact equivalent amount determined based on the $CO_2$ emission amount according to the power type. For example, a price of a product or component manufactured using electric power having a large $CO_2$ emission amount tends to be higher than that of a product or component manufactured using electric power having a small $CO_2$ emission amount. A user can select or purchase a product by referring to the $CO_2$ emission amounts and prices.

Further, a price of a product or component may be calculated based on a $CO_2$ emission amount according to the power type used in a manufacturing process and a $CO_2$ emission amount according to the kind of raw material, and information of the price of the product or component may be output together with the $CO_2$ emission amount. For example, a price of a product or component manufactured using a virgin raw material having a large $CO_2$ emission amount is higher than that of a product or component manufactured using a recycled raw material having a small $CO_2$ emission amount. Also in this case, the user can select or purchase a product by referring to the $CO_2$ emission amounts and prices.

(Configuration Example)

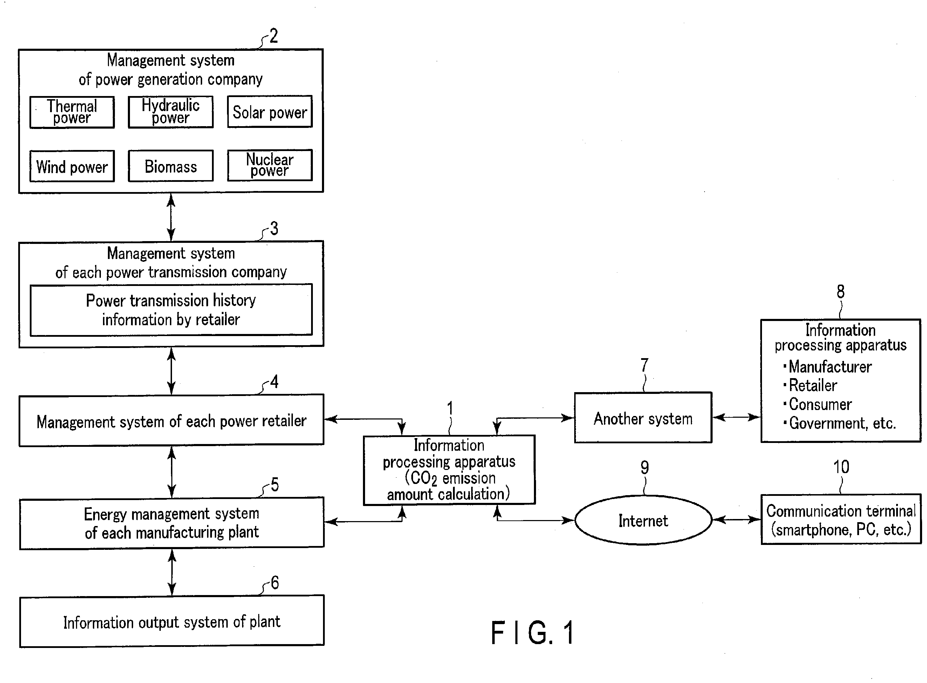

FIG. 1 is a block diagram showing an example of an information processing system according to an embodiment.

As shown in FIG. 1, the information processing system includes an information processing apparatus 1 that calculates a $CO_2$ emission amount. The information processing apparatus 1 directly or indirectly communicates with a management system 2 of each power generation company, a management system 3 of each power transmission company, a management system 4 of a power retailer, an energy management system 5 of a manufacturing plant, and an information output system 6 of a plant, and transmits and receives information to and from each system.

For example, each power generation company supplies a plurality of types of electric power such as thermal power, hydraulic power, solar power, wind power, biomass, and nuclear power, and the management system 2 of each power generation company transmits a plurality of types of power generation information such as thermal power, hydraulic power, solar power, wind power, biomass, and nuclear power. The power generation information includes information such as a type of electric power, an amount of electric power, a region, and a supply time zone. The management system 3 of each power transmission company receives the power generation information from the management system 2 of each power generation company, generates power transmission history information by retailer based on the power generation information, and transmits the power transmission history information. The management system 4 of the power retailer receives the power transmission history information, generates power sales history information based on the power transmission history information, and transmits the power sales history information. The energy management system 5 of the manufacturing plant generates energy information including power purchase history information, power consumption history information, and fuel consumption history information based on various types of information from the information output system 6 of the plant, and transmits the energy information.

The information processing apparatus 1 receives the power sales history information from the management system 4 of the power retailer, receives the energy information from the energy management system 5 of the manufacturing plant, and generates management information from the power sales history information and the energy information. The management information includes raw material information related to one or more kinds of raw materials used in the manufacturing process of the product or component, power information related to one or more types of electric power, and fuel information related to one or more kinds of fuels.

In addition, the information processing apparatus 1 transmits and receives information to and from an information processing apparatus 8 of a manufacturer, a sales company, a consumer, the government, or the like via another system 7. Furthermore, the information processing apparatus 1 communicates with a communication terminal 10 such as a smartphone or a personal computer of each person via a communication network 9 such as the Internet, and transmits and receives information to and from the communication terminal 10.

Each device and each system shown in FIG. 1 can be realized by, for example, a general-purpose computer or a specially-designed computer including a processor, a main storage unit, an auxiliary storage unit, a communication interface, an input/output interface, etc.

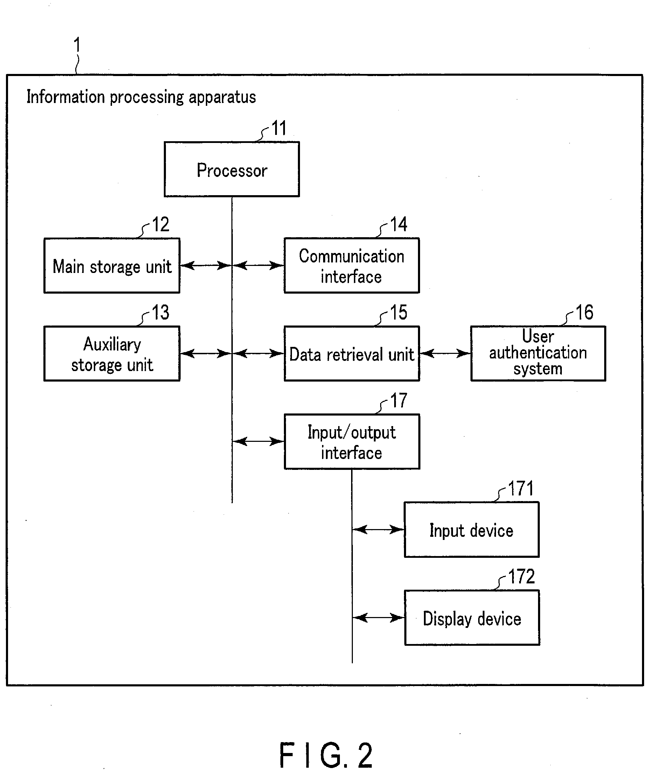

FIG. 2 is a block diagram showing a schematic configuration of the information processing apparatus 1 according to the embodiment.

As shown in FIG. 2, the information processing apparatus 1 includes a processor 11, a main storage unit 12, an auxiliary storage unit 13, a communication interface 14, a data retrieval unit 15, a user authentication system 16, and an input/output interface 17. Further, the information processing apparatus 1 includes an input device 171 and a display device 172 connected to the input/output interface 17.

The processor 11 is a central processing unit (CPU), a micro processing unit (MPU), or a digital signal processor (DSP). Alternatively, the processor 11 is a combination of two or more of them. The processor 11 is connected to each unit, receives a signal from each unit, and outputs a signal to each unit. The processor 11 serves as the core of a computer that executes calculation and control necessary for calculation of $CO_2$. The processor 11 executes calculation and control to realize various functions based on a program such as system software, firmware, or application software stored in the auxiliary storage unit 13 or the like.

The main storage unit 12 includes a read only memory (ROM) and a random access memory (RAM). The ROM is a non-transitory computer-readable storage medium, stores a part or all of the programs described above, and also stores data or various setting values used when the processor performs various processing. The RAM is a working storage area, and temporarily stores processing data, etc. of the processor 11.

The auxiliary storage unit 13 is a non-transitory computer-readable storage medium, and is composed of, for example, at least one of an electric erasable programmable read-only memory (EEPROM), a hard disk drive (HDD), a solid state drive (SSD), or the like. The auxiliary storage unit 13 stores a part or all of the programs described above, and also stores data or various setting values used when the processor performs various processing. Furthermore, the auxiliary storage unit 13 stores management information acquired via the communication interface 14 or the like. In addition, the auxiliary storage unit 13 stores a $CO_2$ emission amount totalization database in which $CO_2$ emission amounts calculated by the processor 11 are accumulated.

The communication interface 14 communicates with each system to transmit and receive various kinds of information. The communication interface 14 also communicates with the information processing apparatus 8 via another system 7 to transmit and receive various kinds of information. The communication interface 14 communicates with the communication terminal 10, etc. via the communication network 9 to transmit and receive various kinds of information. For example, the communication interface 14 receives a power sales history from the management system 4 of each power retailer. The power sales history is information by customer, place of use, power source type, and time zone. The communication interface 14 also receives energy information including a power purchase history, a power consumption history, and a fuel consumption history from the energy management system 5 of each manufacturing plant. The power purchase history is information by power source type and by time zone. The power consumption history is information by device in the plant and by time zone. The fuel consumption history is information by device in the plant and by time zone. In addition, the communication interface 14 receives raw material information from the information output system 6 of the plant. If the raw material includes a virgin raw material, the raw material information includes information indicating that the material is a virgin raw material and a ratio of the virgin raw material to the raw material, and if the raw material includes a recycled raw material, the raw material information includes information indicating that the material is a recycled raw material and a ratio of the recycled raw material to the raw material.

The data retrieval unit 15 retrieves a $CO_2$ emission amount of a product or component from the $CO_2$ emission amount database based on a $CO_2$ emission amount retrieval request from the outside.

Based on user identification information included in the retrieval request, the user authentication system 16 authenticates the retrieval request if the user is authorized, and denies the retrieval request if the user is not authorized.

The input/output interface 17 receives an input from the input device 171, notifies the processor 11 of the input, and outputs display information to the display device 172 based on a display control signal or the like from the processor 11.

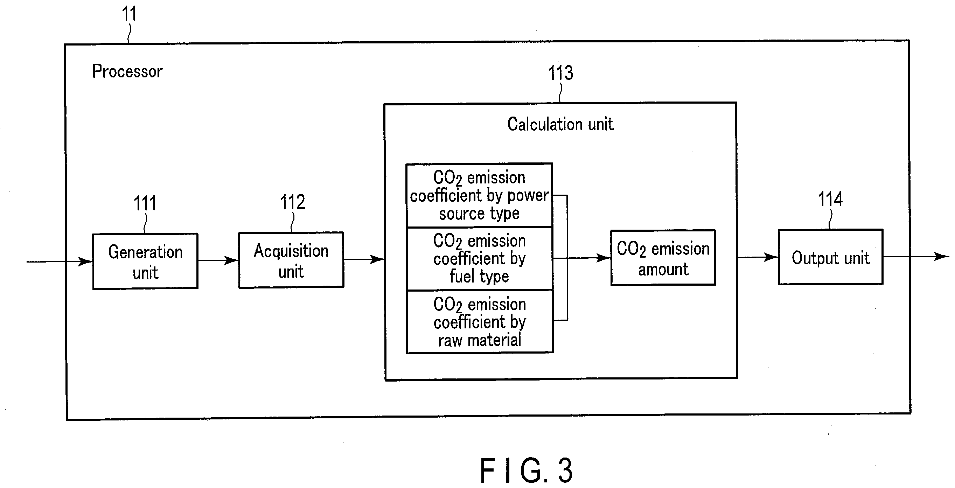

FIG. 3 is a functional block diagram showing an example of the processor of the information processing apparatus according to the embodiment.

As shown in FIG. 3, the processor 11 includes a generation unit 111, an acquisition unit 112, a calculation unit 113, and an output unit 114. The processor 11 realizes functions of these units by executing programs stored in at least one of the main storage unit 12 or the auxiliary storage unit 13. That is, the functions of these units are realized by cooperation between the processor 11 and the programs. These units may be realized by circuit configurations independent of the processor 11.

The generation unit 111 generates management information from the various kinds of information received by the communication interface 14, and the acquisition unit 112 acquires the management information generated by the generation unit 111. For example, the generation unit 111 generates the management information based on the raw material information transmitted from the information output system 6, the power sales history information transmitted from the management system 4 of each power retailer, and the power purchase history, power consumption history, and fuel consumption history transmitted from the energy management system 5 of each manufacturing plant. The management information is information including raw material information related to one or more kinds of raw materials of a product or component, power information related to one or more types of electric power used in a manufacturing process of the product or component among a plurality of types of electric power of different power generating systems, fuel information related to one or more kinds of fuels consumed in the manufacturing process of the product or component, etc. The power information used in the manufacturing process includes information related to power used by a machine tool, a conveying machine, and a transport vehicle, and includes identification information of the product or component, a type of electric power, an amount of electric power, and a time zone. The fuel information used in the manufacturing process includes information related to fuels used by the machine tool, conveying machine, and transport vehicle.

Based on the power information included in the management information, the calculation unit 113 calculates a $CO_2$ emission amount E1 emitted to obtain electric power used in manufacturing of the product or component. The calculation unit 113 calculates the $CO_2$ emission amount E1 based on the electric power of different power generating systems with different calculation methods. That is, the $CO_2$ emission amount E1 by power type is calculated based on a $CO_2$ emission coefficient by power type. For example, a $CO_2$ emission amount calculation coefficient for thermal power generation is set to a value greater than a $CO_2$ emission amount calculation coefficient for solar power generation. Thus, the $CO_2$ emission amount of the manufactured product or component is large if the ratio of the thermal power generation to the used power is high, and the $CO_2$ emission amount of the manufactured product or component is small if the ratio of the solar power generation to the used power is high.

In addition, the calculation unit 113 calculates a $CO_2$ emission amount E2 emitted to obtain the raw material used in manufacturing of the product or component based on the raw material information included in the management information. The calculation unit 113 calculates the $CO_2$ emission amount E2 based on a virgin raw material and a recycled raw material with different calculation methods. For example, a $CO_2$ emission amount calculation coefficient for the virgin raw material is set to a value greater than a $CO_2$ emission amount calculation coefficient for the virgin raw material. Thus, the higher the ratio of the virgin raw material to the raw material, the larger the $CO_2$ emission amount of the product or component manufactured from that raw material.

Further, the calculation unit 113 calculates a $CO_2$ emission amount E3 emitted through manufacturing of the product or component based on the fuel information included in the management information. The $CO_2$ emission amount calculation coefficient for each fuel differs depending on the kind of fuel.

In addition, the calculation unit 113 calculates a price of the product or component based on the $CO_2$ emission amount according to the type of electric power used in the manufacturing process. Further, the calculation unit 113 calculates a price of the product or component based on the $CO_2$ emission amount according to the type of electric power used in the manufacturing process and the $CO_2$ emission amount according to the kind of raw material. For example, the calculation unit 113 calculates the price of the product or component based on a $CO_2$ emission amount by using an environmental impact equivalent amount determined according to the $CO_2$ emission amount.

The output unit 114 outputs information related to the $CO_2$ emission amounts E1, E2, and E3. For example, the output unit 114 outputs the $CO_2$ emission amounts E1, E2, and E3 for each product or component, or outputs a sum of the $CO_2$ emission amounts E1, E2, and E3 for each product or component. The output $CO_2$ emission amounts E1,

E2, and E3 are stored in the $CO_2$ emission totalization database of the auxiliary storage unit 13 or the like.

In addition, the output unit 114 outputs the price of the product or component calculated based on the $CO_2$ emission amount together with the information related to the $CO_2$ emission amounts E1, E2, and E3. The price of the product or component calculated based on the output $CO_2$ emission amount is stored in the $CO_2$ emission totalization database of the auxiliary storage unit 13 or the like.

The information processing apparatus 1 can provide information related to a substantive emission amount of $CO_2$ emitted in a manufacturing process of a product or component based on management information including power information, etc.

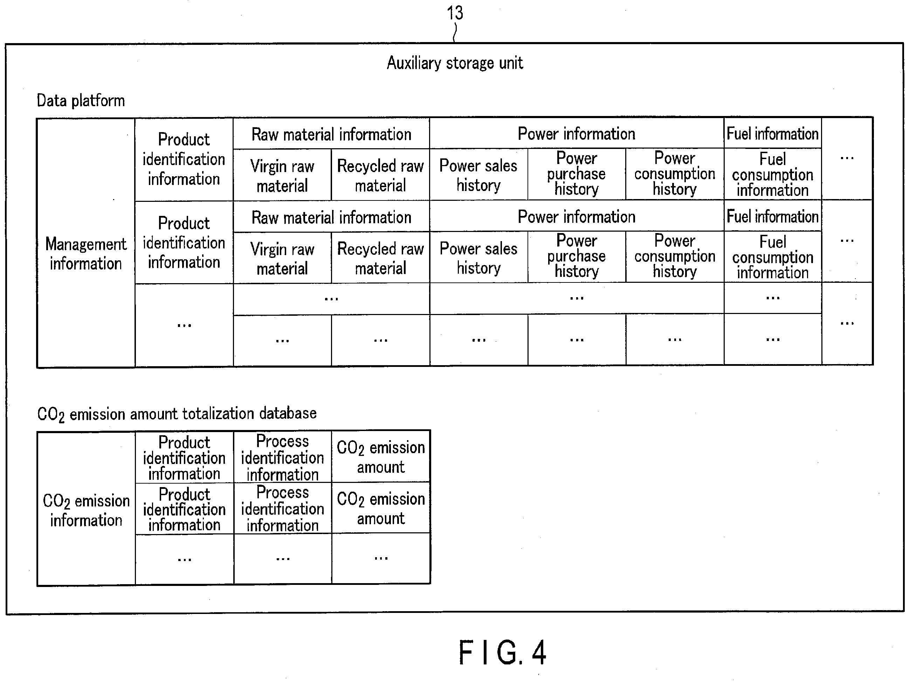

FIG. 4 is a diagram showing an example of a data platform, etc. stored in the auxiliary storage unit of the information processing apparatus according to the embodiment.

As shown in FIG. 4, the auxiliary storage unit 13 stores a data platform and a $CO_2$ emission amount database. The data platform includes management information generated by the generation unit 111, and the management information includes identification information of a product or component (abbreviated as product identification information in FIG. 4), raw material information, power information, fuel information, etc. The $CO_2$ emission amount database includes $CO_2$ emission information. The $CO_2$ emission information includes identification information of a product or component, process identification information, a $CO_2$ emission amount, etc. The process identification information is information for identifying a manufacturing process, a use process, a reuse process, etc.

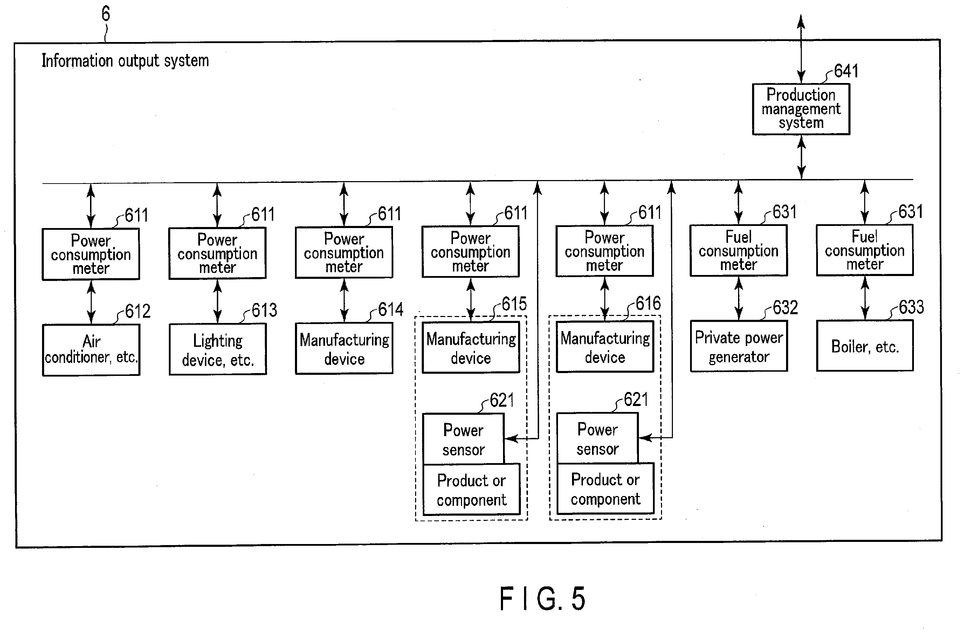

FIG. 5 is a block diagram showing an example of a schematic configuration of the information output system of the plant according to the embodiment.

As shown in FIG. 5, the information output system 6 outputs information including a time-synchronized time stamp. For example, the information output system 6 outputs a power consumption amount by time zone provided from power consumption meters 611 of an air conditioner 612 and a lighting device 613. The information output system 6 also outputs identification information of the product or component and a power consumption amount by time zone provided from power consumption meters 611 of manufacturing devices 614, 615, and 616. In addition, a power sensor 621 is attached to each product or component, and the information output system 6 outputs identification information of the product or component and a power consumption amount consumed by the product or component provided from the power sensor 621. Further, the information output system 6 outputs a fuel consumption amount by time zone provided from fuel consumption amount meters 631 of a private power generator 632 and a boiler 633.

A production management system 641 of the plant manages and outputs an operation time by product of each device in the plant.

(Operation Example)

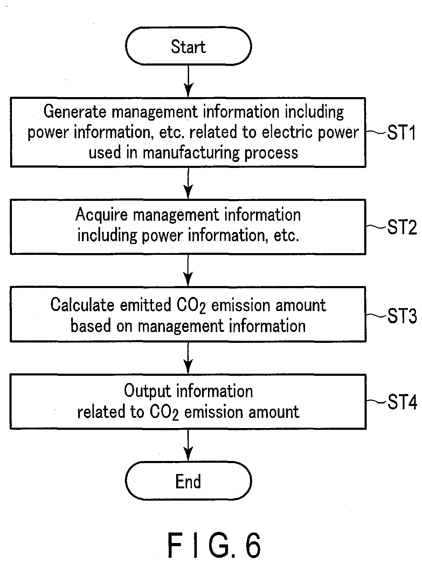

FIG. 6 is a flowchart showing an example of information processing including $CO_2$ emission amount calculation performed by the information processing apparatus according to the embodiment.

The generation unit 111 of the information processing apparatus 1 generates management information from various kinds of information received by the communication interface 14 (ST1). The management information includes raw material information related to one or more kinds of raw materials used in a manufacturing process of a product or component, power information related to one or more types of electric power selected from a plurality of types of electric power, fuel information related to one or more kinds of fuels selected from a plurality of kinds of fuels, etc.

The acquisition unit 112 acquires the management information generated by the generation unit 111 (ST2). In the present embodiment, a case in which the information processing apparatus 1 generates the management information will be described. However, in a case where an external server or the like different from the information processing apparatus 1 generates management information, the communication interface 14 acquires the management information generated by the external server or the like.

Based on the power information included in the management information, the calculation unit 113 calculates the $CO_2$ emission amount E1 emitted to obtain electric power used in manufacturing of the product or component (ST3). The calculation unit 113 also calculates the $CO_2$ emission amount E2 emitted to obtain a raw material used in manufacturing of the product or component based on the raw material information included in the management information. Further, the calculation unit 113 calculates the $CO_2$ emission amount E3 emitted through manufacturing of the product or component based on the fuel information included in the management information.

The output unit 114 outputs information related to the $CO_2$ emission amount E1 emitted to obtain the electric power used in manufacturing of the product or component (ST4). The output unit 114 also outputs information related to the $CO_2$ emission amount E2 emitted to obtain the raw material used in manufacturing of the product or component. In addition, the output unit 114 outputs information related to the $CO_2$ emission amount E2 emitted according to consumption of the fuel used in manufacturing of the product or component. The output unit 114 outputs the $CO_2$ emission amounts E1, E2, and E3 for each product or component, or outputs a total value of the $CO_2$ emission amounts E1, E2, and E3 for each product or component.

(Supplementary Notes)

In the following, a supplementary description will be given of a method for calculating or estimating the $CO_2$ emission amount.

<Method for Calculating or Estimating $CO_2$ Emission Amount>

A description will be given of an example of a method for calculating or estimating a $CO_2$ emission amount in each process of manufacturing, use, and reuse performed by the information processing system according to the embodiment.

For example, the following data are used as parameters to calculate and estimate the $CO_2$ emission amount.

a) Product number

[0053]   A product number is a number for individually identifying that product or component itself. For example, the product number is assigned at the time of manufacturing planning.

b) Direct use device number

[0054]   A direct use device number is a number for identifying a specific device (machine tool, robot, conveyor, or the like) that is directly used (occupied by the product or component) one by one throughout the whole process including manufacturing, use, collection, etc. of that product or component. For example, the direct use device number is assigned at the time of system construction and setting.

c) Indirect use device number

[0055]   An indirect use device number is a number for identifying a device (a device requiring a power source or fuel, such as a power machine, an engine, a boiler, a computer, a communication device, a server on a data center, lighting, air conditioning, a transportation vehicle, or a storage battery) that is used indirectly (in common with other products or components) throughout the whole process including manufacturing, use, collection, etc. of the product or component. The indirect use device number is assigned at the time of system construction and setting.

d) Operation time

An operation time is a time from a time when each device or a product with product number a itself starts operation to a time (year, month, date, and time) when the operation is completed over the whole process including manufacturing, use, collection, etc. of the product number a. Note that an "operation time" is recorded for each series of operation steps not only at the time of manufacturing the product or component but also at the time of shipping and delivery, the time of use, the time of collection, etc.

e) Usage rate by power source

A usage rate by power source is a ratio of electric power supplied by a power retailer during a time zone by power source type (thermal power, hydraulic power, solar power, wind power, biomass, nuclear power, etc.). The usage rate by power source is acquired from contract information between a power retailer and a consumer (manufacturer, user, or the like). Since the usage rate by power source changes depending on a time zone, time, a type of power usage contract, etc. due to a management policy, etc. of the contracted power retailer, values thereof are managed, recorded, and held in time series (past usage rates by power source are held without being deleted in order to ensure traceability).

f) $CO_2$ emission amount coefficient by power source

A $CO_2$ emission amount coefficient by power source is a coefficient set according to a $CO_2$ emission amount per 1 kwh of electric power by power source type. The $CO_2$ emission amount coefficient by power source is acquired from materials disclosed by a power retailer or materials of an average value of $CO_2$ emission amounts by power source published by the Ministry of Economy Agency for Natural Resources and Energy, etc. Since the $CO_2$ emission amount coefficient by power source changes due to technical evolution (a performance of a power generation facility used by a power generation company), a place of power use, a power transmission distance, a power transmission/distribution efficiency, etc., values thereof are managed, recorded, and held in time series (past coefficients are also held without being deleted in order to ensure traceability).

g) Power consumption amount

A power consumption amount is an amount of electric power consumed by each device/machine during an operation time d (including an amount of electric power consumed by that product or component itself). The power consumption amount is measured by a sensor built into the device and machine or an externally attached electric energy meter, and is managed in association with the product number a, a direct use device number b, and an indirect use device number c.

h) $CO_2$ emission amount coefficient by fuel

A $CO_2$ emission amount coefficient by fuel is a coefficient according to a $CO_2$ emission amount per unit consumption amount of each fuel (heavy oil, gasoline, wood chips, etc.). The $CO_2$ emission amount coefficient by fuel is calculated from an element amount (chemical formula, etc.) of the fuel and materials disclosed by the government or academic institutions.

i) Fuel consumption amount

A fuel consumption amount is a type and a usage amount of fuel consumed by each device during the operation time d (including fuel consumed by the product or component itself). The fuel consumption amount is measured by a sensor built into the device and machine, an externally attached fuel flowmeter, or the like, and is managed in association with the product number a, the direct use device number b, and the indirect use device number c.

j) Product $CO_2$ emission amount

A product $CO_2$ emission amount is an emission amount of $CO_2$ generated due to consumption of electric power and fuel by the product number a itself during the operation time d. The product $CO_2$ emission amount is a sum of a $CO_2$ emission amount due to power consumption by power source type and a $CO_2$ emission amount due to fuel consumption by fuel type. The $CO_2$ emission amount due to power consumption by power source type is calculated by multiplying a consumed power amount (kwh) by a usage rate by power source e to calculate a power consumption amount by power source type, multiplying each value by the $CO_2$ emission amount coefficient by power source f, and summing the obtained values. The $CO_2$ emission amount due to fuel consumption by fuel type is obtained by multiplying a fuel consumption amount i by a $CO_2$ emission amount coefficient by fuel h. The product $CO_2$ emission amount is calculated by acquiring data from a sensor built into a product or component, an externally attached electric power and fuel consumption meter, or the like, and is managed in association with the product number a.

k) Direct use device $CO_2$ emission amount

A direct use device $CO_2$ emission amount is a total amount (a calculation method is the same as j) of $CO_2$ emitted by the direct use device b used over the whole process including manufacturing, use, collection, etc. of the product number a during the operation time d. The direct use device $CO_2$ emission amount is calculated by acquiring data using a sensor built into each device, an externally attached electric power and fuel consumption meter, or the like, and is managed in association with the product number a.

1) Other product direct use device $CO_2$ emission amount

An other product direct use device $CO_2$ emission amount is a sum (a calculation method is the same as j) of a $CO_2$ amount emitted due to power and fuel consumption of another direct use device occupied for manufacturing and collection of another product or component in the same plant (in the case of manufacturing and collection) and a $CO_2$ amount emitted due to power and fuel consumption of another direct use device occupied for use of another product or component in a finished product (e.g., a passenger car, an office building, etc.) constituted by a product or component (in the case of use), during the operation time d. The other product direct use device $CO_2$ emission amount is calculated by acquiring data using a sensor built into each device, an externally attached power and fuel consumption meter, or the like, and is managed in association with the product number a.

8

m) Indirect use device $CO_2$ emission amount

An indirect use device $CO_2$ emission amount is a total amount (a calculation method is the same as j) of $CO_2$ emitted by the indirect use device c during the operation time d. The indirect use device $CO_2$ emission amount is calculated by acquiring data using a sensor built into each device, an externally attached power and fuel consumption meter, or the like, and is managed in association with the product number a.

n) Product or component $CO_2$ emission amount

A product or component $CO_2$ emission amount is calculated as follows. First, a coefficient for appropriately distributing (assigning) an indirect use device $CO_2$ emission amount l used throughout the whole process including manufacturing, use, collection, etc. as a $CO_2$ emission amount of that product or component for each discretionary operation time d to be totaled is calculated by, for example, the following formula.

$$k/(k + 1)$$

Using this coefficient, a total amount of $CO_2$ emitted over the whole process including manufacturing, use, collection, etc. of that product or component for each operation time d is calculated by the following formula.

$$J + k + \{m \times k/(k + 1)\}$$

According to the above-described method, the information processing system according to the embodiment finely analyzes and totalizes a $CO_2$ emission amount until all products or components are completed from raw materials through processes such as processing, forming, and assembling, and then are inspected, shipped, delivered, used, collected, reused, and recycled, by process, device used, power source used, time, etc. for each and every product or component.

<Selection of Power Type for Each Process>

For example, the energy management system 5 selects and uses inexpensive electric power such as thermal power with a large amount of $CO_2$ emission for a process requiring relatively large electric power, and selects and uses expensive electric power such as solar power with a small amount of $CO_2$ emission for a process requiring small electric power.
As another example, the energy management system 5 mainly selects and uses electric power generated by solar power or wind power in a daytime time zone or a time zone in which wind power is strong, and mainly selects and uses electric power generated by thermal power, nuclear power, or the like in a nighttime time zone.
For example, the energy management system 5 selects one or more power sources from among a plurality of types of power sources such as thermal power, hydraulic power, solar power, wind power, biomass, and nuclear power based on the following information.

- Day rate (yen/kwh) of power source type by time zone (date and time)
- Future reservation rate (N hours advance reservation rate yen/kwh) for each power source type by time zone (date and time)
- Maximum providable capacity (kw) for each power source type by time zone (date and time) and its achievement probability (%)
- Minimum provision guaranteed capacity (kw) for each power source type by time zone (date and time)
- Average provision amount (kw) for each power source type by time zone (date and time)
- Power source type of alternative provision power if power generation amount (suppliable amount) of each power source (in particular, solar power or wind power) by time zone (date and time) falls below prediction (e.g., priority order 1 = hydraulic power, 2 = solar power, 3 = wind power, 4 = thermal power, 5 = nuclear power)
- $CO_2$ emission amount (g/kwh) associated with processing from power generation to power transmission of power source type
- Remaining battery level (kwh) of storage battery owned by user (plant or the like) and power source type (thermal power, solar power, hydraulic power, private power generation, or the like) of procurement source of stored power
- Operable time of private power generator owned by user (plant or the like) (calculated from inventory amount of fuel)

The information processing apparatus 1, instead of the energy management system 5, may select a power source. As described above, power sources having different $CO_2$ emission amounts are selected by the energy management system 5 or the information processing apparatus 1 based on the various conditions, but the information processing apparatus 1 can accurately calculate, record, trace, and verify the $CO_2$ emission amount regardless of which power type is selected and used.

<Calculation Method of $CO_2$ Emission Amount for Each Power Type>

For example, the information processing apparatus 1 stores a $CO_2$ emission amount per unit time by power type in advance, measures a use time and a use amount for each selected power type, and calculates a $CO_2$ emission amount required for manufacturing a product or component according to the measurement values and the $CO_2$ emission amount per unit time.

The information processing apparatus 1 also calculates a $CO_2$ emission amount by power type based on a $CO_2$ emission coefficient by power type. The information processing apparatus 1 acquires a $CO_2$ emission amount (g/kwh) required for processing from power generation to power transmission by power source type from a report of a power company (power generation/power transmission and distribution/power retailer), the government, etc., and registers a value thereof as a $CO_2$ emission coefficient by power retailer and power source type. The information processing apparatus 1 updates this $CO_2$ emission coefficient every time information from the power company and information of the government report, etc. are updated.

If a manufacturing device or a product itself to be manufactured actually consumes electric power, an electric power meter or an electric power sensor built in or externally attached to the device or product measures a power consumption amount by time and outputs a value thereof to the energy management system 5.

For example, if the energy management system 5 receives electric power of a plurality of types of power sources (e.g., solar power, wind power, and thermal power) from a power retailer in a predetermined time zone, the energy management system 5 sets, as a variable coefficient, which type of power source power is allocated to each device in the plant in which priority order and in what ratio, and logically calculates which device consumes which type of power source power in the predetermined time zone. For example, a sum of power consumption amounts of all devices or a sum of power consumption amounts of all products or components is logically equal to a total power amount received by the entire plant, but a deviation occurs due to a power transmission loss, etc. in the plant. Therefore, the power lost due to the power transmission loss, etc. in the plant is adjusted by being distributed according to a ratio of power consumption amounts of the devices.

The energy management system 5 creates consumption amount detailed data by power source type on amounts of electric power actually consumed by each device and the product itself. The information processing apparatus 1 multiplies each value by the coefficient (g/kwh) of the $CO_2$ emission amount involved in processing from power generation to power transmission by power source type described above to calculate an emission amount of $CO_2$ emitted by each device and the product itself in that time zone. A total sum thereof is logically equal to a $CO_2$ emission amount of a total power amount received by the plant in that time zone, but since a deviation occurs due to a power transmission loss, etc. in the plant, a $CO_2$ emission amount due to the power lost in the plant is adjusted by distributing according to a ratio of $CO_2$ emission amounts of the devices.

Further, the information processing apparatus 1 calculates a $CO_2$ emission amount due to combustion of fuel used in the plant to produce energy other than received power (fuel for a boiler, a private power generator, or the like) from a fuel consumption amount for each device and a $CO_2$ emission amount coefficient by fuel.

The information processing apparatus 1 divides the calculated $CO_2$ emission amount of each device into a $CO_2$ emission amount of a device directly used for manufacturing the product, a $CO_2$ emission amount of a device directly used for manufacturing another product, and a $CO_2$ emission amount of a device commonly used in the plant, distributes the $CO_2$ emission amount of the device commonly used in the plant as an indirect $CO_2$ emission amount of the device directly used for manufacturing, and sums them up to calculate a $CO_2$ emission amount emitted through manufacturing of that product.

Regarding the electric power received and the fuel burned in the plant site, those used for applications completely unrelated to manufacturing of products (e.g., a surplus of the electric power produced in the plant site is supplied to nearby hospitals and companies) may be excluded from the subject of the $CO_2$ emission amount distributed to the products produced in the plant.

<Calculation of $CO_2$ Emission Amount Based on Power Usage History>

It is presumed that the power usage history changes for each process and further for each time zone, and a method for calculating the $CO_2$ emission amount for each process or the entire manufacturing process according to the changes will be described.

According to the above-described method, a power consumption amount of each product itself is measured by an externally attached power meter or a built-in power sensor for each device by time zone (for each year, month, date, and time), and a ratio by power source type of electric power received from a power retailer in that time zone is recorded. Thus, a $CO_2$ emission amount for each process, each time zone, and each device is detected and distributed and totaled as a $CO_2$ emission amount emitted for manufacturing each product.

<Power Use Certification>

An example of a mechanism for automatically grasping, verifying, and certifying when, where, from which electric power company, and what kind of electric power is used for each device and machine used for manufacturing, conveying, and transporting a product or component will be described.

The energy management system 5 acquires and records a value of a combination ratio of power source types in each time zone from a power retailer based on a contract with the power retailer. The information processing apparatus 1 acquires a "power procurement and transmission history by power source by customer (retailer)" managed by the management system 3 of each power transmission company and information of a certificate (e.g., green power certificate, etc.) inspected and certified by a third party system online or offline and registers them in the platform, and collates with the value of the combination ratio of power source types provided by the retailer to check whether there is tampering, forgery, an error, etc.

According to the embodiment described above, an information processing apparatus, an information processing method, and a program thereof that can provide information related to a substantive emission amount of $CO_2$ emitted in a manufacturing process of a product or component can be provided.

In short, this invention is not limited to the above-described embodiment as it is, and can be embodied by modifying the constituent elements without departing from the gist of the invention in an implementation stage. Further, various inventions can be formed by appropriately combining a plurality of constituent elements disclosed in the above-described embodiment. For example, some constituent elements may be deleted from the constituent elements indicated in the embodiment. Furthermore, constituent elements in different embodiments may be appropriately combined.

REFERENCE SIGNS LIST

| | |
|---|---|
| 1: | information processing apparatus |
| 2: | management system of power generation company |
| 3: | management system of power transmission company |
| 4: | management system of power retailer |
| 5: | energy management system of manufacturing plant |
| 6: | information output system of plant |
| 7: | another system |
| 8: | information processing apparatus |
| 9: | communication network |
| 10: | communication terminal |
| 11: | processor |
| 12: | main storage unit |
| 13: | auxiliary storage unit |
| 14: | communication interface |
| 15: | data retrieval unit |
| 16: | user authentication system |
| 17: | input/output interface |
| 111: | generation unit |
| 112: | acquisition unit |
| 113: | calculation unit |
| 114: | output unit |
| 171: | input device |
| 172: | display device |
| 611: | power consumption meter |
| 612: | air conditioner |
| 613: | lighting device |
| 614, 615, and 616: | manufacturing device |

| 621: | power sensor |
| 631: | fuel consumption meter |
| 632: | private power generator |
| 633: | boiler |
| 641: | production management system of plant |

**Claims**

1. An information processing apparatus comprising:

   an acquisition unit configured to acquire management information including power information related to one or more types of electric power used in a manufacturing process of a product or component among a plurality of types of electric power of different power generating systems;
   a calculation unit configured to calculate a first carbon dioxide emission amount emitted through manufacturing of the product or component based on the power information included in the management information; and
   an output unit configured to output information related to the first carbon dioxide emission amount.

2. The information processing apparatus according to claim 1, wherein the management information includes the power information related to electric power used by a machine tool, a conveying machine, and a transport vehicle in the manufacturing process of the product or component.

3. The information processing apparatus according to claim 1 or 2, wherein the power information includes identification information of the product or component, and a type and an amount of the electric power used in the manufacturing process of the product or component.

4. The information processing apparatus according to any one of claims 1 to 3, wherein the power information includes a use time zone of the electric power used in the manufacturing process of the product or component.

5. The information processing apparatus according to claim 1, wherein

   the management information includes raw material information related to one or more kinds of raw materials of the product or component,
   the calculation unit is configured to calculate a second carbon dioxide emission amount emitted to obtain the raw material based on the raw material information included in the management information, and
   the output unit is configured to output information related to the first carbon dioxide emission amount and the second carbon dioxide emission amount.

6. The information processing apparatus according to claim 5, wherein

   the raw material information includes information indicating that the raw material is a virgin raw material and information indicating that the raw material is a recycled raw material, and
   the calculation unit is configured to calculate the second carbon dioxide emission amount based on the virgin raw material and the recycled raw material with different calculation methods.

7. The information processing apparatus according to any one of claims 1 to 4, wherein the calculation unit is configured to calculate a price of the product or component based on the first carbon dioxide emission amount, and the output unit is configured to output the price of the product or component.

8. The information processing apparatus according to claim 5 or 6, wherein

   the calculation unit is configured to calculate a price of the product or component based on the first carbon dioxide emission amount and the second carbon dioxide emission amount, and
   the output unit is configured to output the price of the product or component.

9. An information processing method comprising:

   acquiring management information including power information related to one or more types of electric power used in a manufacturing process of a product or component among a plurality of types of electric power of different power generating systems;

calculating a first carbon dioxide emission amount emitted through manufacturing of the product or component based on the power information included in the management information; and

outputting information related to the first carbon dioxide emission amount.

10. A program for causing a computer to execute:

acquiring management information including power information related to one or more types of electric power used in a manufacturing process of a product or component among a plurality of types of electric power of different power generating systems;

calculating a first carbon dioxide emission amount emitted through manufacturing of the product or component based on the power information included in the management information; and

outputting information related to the first carbon dioxide emission amount.

## Management system
## of power generation company

| Thermal power | Hydraulic power | Solar power |
|---|---|---|
| Wind power | Biomass | Nuclear power |

2

## Management system
## of each power transmission company

Power transmission history
information by retailer

3

Management system of each power retailer

4

Energy management system
of each manufacturing plant

5

Information output system of plant

6

Information
processing apparatus
(CO$_2$ emission
amount calculation)

1

Another system

7

Information
processing apparatus
• Manufacturer
• Retailer
• Consumer
• Government, etc.

8

Internet

9

Communication terminal
(smartphone, PC, etc.)

10

F I G. 1

1

Information processing apparatus

11

Processor

12

Main storage unit

14

Communication interface

13

Auxiliary storage unit

15

Data retrieval unit

16

User authentication system

17

Input/output interface

171

Input device

172

Display device

FIG. 2

F I G. 3

**13**

## Auxiliary storage unit

Data platform

| Management information | Product identification information | Raw material information | | Power information | | | Fuel information | |
|---|---|---|---|---|---|---|---|---|
| | | Virgin raw material | Recycled raw material | Power sales history | Power purchase history | Power consumption history | Fuel consumption information | ... |
| | Product identification information | Raw material information | | Power information | | | Fuel information | |
| | | Virgin raw material | Recycled raw material | Power sales history | Power purchase history | Power consumption history | Fuel consumption information | ... |
| | ... | ... | | ... | | | ... | |
| | | ... | ... | ... | ... | ... | ... | ... |

$CO_2$ emission amount totalization database

| $CO_2$ emission information | Product identification information | Process identification information | $CO_2$ emission amount |
|---|---|---|---|
| | Product identification information | Process identification information | $CO_2$ emission amount |
| | ... | ... | ... |

FIG. 4

EP 4 160 333 A1

FIG. 5

```
                    ┌──────────────┐
                    │    Start     │
                    └──────┬───────┘
                           │
                           ▼
    ┌──────────────────────────────────────────┐
    │  Generate management information including │
    │ power information, etc. related to electric power │──ST1
    │        used in manufacturing process        │
    └──────────────────────┬─────────────────────┘
                           │
                           ▼
    ┌──────────────────────────────────────────┐
    │       Acquire management information        │
    │     including power information, etc.       │──ST2
    └──────────────────────┬─────────────────────┘
                           │
                           ▼
    ┌──────────────────────────────────────────┐
    │    Calculate emitted CO2 emission amount    │
    │       based on management information       │──ST3
    └──────────────────────┬─────────────────────┘
                           │
                           ▼
    ┌──────────────────────────────────────────┐
    │             Output information              │
    │       related to CO2 emission amount        │──ST4
    └──────────────────────┬─────────────────────┘
                           │
                           ▼
                    ┌──────────────┐
                    │     End      │
                    └──────────────┘
```

FIG. 6

## INTERNATIONAL SEARCH REPORT

| International application No. |
|---|
| PCT/JP2021/020049 |

### A. CLASSIFICATION OF SUBJECT MATTER
G05B 19/418(2006.01)i; G06Q 50/04(2012.01)i
FI: G05B19/418 Z; G06Q50/04

According to International Patent Classification (IPC) or to both national classification and IPC

### B. FIELDS SEARCHED

Minimum documentation searched (classification system followed by classification symbols)
G05B19/418; G06Q50/04

Documentation searched other than minimum documentation to the extent that such documents are included in the fields searched

| | |
|---|---|
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>Y | JP 2001-142528 A (MATSUSHITA ELECTRIC INDUSTRIAL CO., LTD.) 25 May 2001 (2001-05-25) paragraphs [0001], [0035], [0049]-[0052] | 1, 3-4, 9-10<br>2, 5-8 |
| Y | JP 2010-3192 A (DAP REALIZE INC.) 07 January 2010 (2010-01-07) paragraph [0020] | 2, 5-6, 8 |
| Y | JP 2002-245202 A (MATSUSHITA ELECTRIC INDUSTRIAL CO., LTD.) 30 August 2002 (2002-08-30) claims 1, 3 | 2, 5-6, 8 |
| Y | JP 2015-228195 A (NIPPON TELEGRAPH AND TELEPHONE CORP.) 17 December 2015 (2015-12-17) paragraph [0093] | 7-8 |
| Y | JP 2011-204217 A (SHISEIDO CO., LTD.) 13 October 2011 (2011-10-13) paragraph [0131] | 7-8 |
| A | US 2010/0042453 A1 (SCARAMELLINO, Thomas Joseph) 18 February 2010 (2010-02-18) | 1-10 |

☐ Further documents are listed in the continuation of Box C.  ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 14 July 2021 (14.07.2021) | 27 July 2021 (27.07.2021) |

| Name and mailing address of the ISA/ | Authorized officer |
|---|---|
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

INTERNATIONAL SEARCH REPORT

Information on patent family members

International application No.

PCT/JP2021/020049

| Patent Documents referred in the Report | Publication Date | Patent Family | Publication Date |
|---|---|---|---|
| JP 2001-142528 A | 25 May 2001 | EP 1113375 A2 paragraphs [0001], [0036], [0050]-[0059] US 6820045 B1 | |
| JP 2010-3192 A | 07 Jan. 2010 | (Family: none) | |
| JP 2002-245202 A | 30 Aug. 2002 | (Family: none) | |
| JP 2015-228195 A | 17 Dec. 2015 | (Family: none) | |
| JP 2011-204217 A | 13 Oct. 2011 | (Family: none) | |
| US 2010/0042453 A1 | 18 Feb. 2010 | WO 2010/019235 A1 | |

Form PCT/ISA/210 (patent family annex) (January 2015)

**EP 4 160 333 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004310440 A